# EUROPÄISCHE PATENTSCHRIFT

(11) **EP 3 735 331 B1**
(45) Veröffentlichungstag und Bekanntmachung des Hinweises auf die Patenterteilung: **11.08.2021**
(21) Anmeldenummer: 19790195.2
(22) Anmeldetag: 17.10.2019
(51) Int. Cl.: B23D 15/08, B23D 19/04, B23D 35/00

(54) **VORRICHTUNG ZUM SCHNEIDEN VON BLECH**
APPARATUS FOR CUTTING METAL SHEET
DISPOSITIF DE COUPE DE TÔLES

(30) Priorität: 18.10.2018 DE 102018217906
(43) Veröffentlichungstag der Anmeldung: 11.11.2020
(73) Patentinhaber: Asco Biegetechnik Gmbh, 83483 Bischofswiesen (DE)
(72) Erfinder: MATTHÄSS, Sylvio, 83457 Bayerisch Gmain (DE)
(74) Vertreter: Feller, Frank
(86) Internationale Anmeldenummer: PCT/EP2019/078251
(87) Internationale Veröffentlichungsnummer: WO 2020/079166

(56) Entgegenhaltungen:
- EP-A1- 0 289 799
- EP-A1- 0 718 065
- WO-A1-96/03245
- CN-B- 102 380 657

## Beschreibung

### I. Anwendungsgebiet

Die vorliegende Erfindung betrifft eine Vorrichtung zum Schneiden von Blech mit einem ersten und einem zweiten Rundmesser. Sie kann insbesondere in Verbindung mit Blechbiegemaschinen Anwendung finden, bei denen sie das zu biegende Blech vordem Biegen abschneidet.

### II. Technischer Hintergrund

In Zusammenhang mit Blechbiegemaschinen sind Vorrichtungen zum Schneiden von Blech mit zwei Rundmessern bereits bekannt. Insbesondere in Abhängigkeit von der Dicke des zu schneidenden Blechs ist es erforderlich, die Relativstellung der Messerschneiden der beiden Rundmesser relativ zueinander einzustellen, um ein qualitativ gutes Schneidergebnis zu erzielen. Bei den einzustellenden Parametern handelt es sich zum einen um die sogenannte Schnittluft, um welche die erste Messerschneide in Richtung der Drehachse des ersten Rundmessers von der zweiten Messerschneide beabstandet ist, und zum anderen um die sogenannte Eintauchtiefe, um welche die erste Messerschneide und die zweite Messerschneide einander radial in einer Richtung senkrecht zu den Drehachsen der Rundmesser überlappen.

Bei den bekannten Vorrichtungen zum Schneiden von Blech sind eine erste Einstelleinrichtung zum manuellen Einstellen der Schnittluft und eine zweite Einstelleinrichtung zum manuellen Einstellen der Eintauchtiefe vorhanden. Dabei erfolgt das Einstellen der Parameter Schnittluft sowie Eintauchtiefe unabhängig voneinander. In der Praxis ergeben sich dadurch immer wieder schlechte Schneidergebnisse, da nicht die für eine bestimmte Blechdicke erforderliche Korrelation zwischen Schnittluft einerseits und Eintauchtiefe andererseits korrekt eingestellt wird. Darüber hinaus stellt das unabhängige Bedienen zweier Einstelleinrichtungen einen vergleichsweise hohen Einrichtaufwand dar.

Aus der CN 102 380 657 B ist eine Vorrichtung zum Schneiden von Blech mit zwei Rundmessern bekannt, welche die Merkmale des Oberbegriffs des Anspruchs 1 aufweist. Diese bekannte Vorrichtung kann zwar unter anderem im Wege einer Betriebsart betrieben werden, gemäß welcher sich die Schnittluft und die Eintauchtiefe nach einer vorgegebenen Regel ändern, jedoch weist sie eine komplizierte Konstruktion auf, die insgesamt drei verschiedene Exzenterwellen umfasst.

### III. Darstellung der Erfindung

### a) Technische Aufgabe

Es ist daher die Aufgabe der vorliegenden Erfindung, eine Vorrichtung zum Schneiden von Blech mit zwei Rundmessern zu schaffen, die das Erreichen qualitativ hochwertiger Schneidergebnisse gewährleistet und gleichzeitig mit einem möglichst geringen Einrichtaufwand sowie einer möglichst einfachen Konstruktion verbunden ist.

### b) Lösung der Aufgabe

Diese Aufgabe wird mittels einer Vorrichtung mit den Merkmalen des Anspruchs 1 gelöst. Weitere Ausgestaltungen der vorliegenden Erfindung ergeben sich aus den Unteransprüchen.

Erfindungsgemäß wird eine Vorrichtung zum Schneiden von Blech umfassend ein erstes Rundmesser mit einer ersten Messerschneide und ein zweites Rundmesser mit einer zweiten Messerschneide vorgeschlagen, wobei sich das zu schneidende Blech beim Schneiden zwischen dem ersten Rundmesser und dem zweiten Rundmesser befindet. Das erste Rundmesser ist um eine erste Drehachse und das zweite Rundmesser ist um eine zweite Drehachse drehbar gelagert, die parallel zu der ersten Drehachse verläuft. Beide Rundmesser rollen während des Schneidvorgangs vorzugsweise passiv um ihre jeweilige Drehachse ab. Eine Relativstellung des ersten Rundmessers relativ zu dem zweiten Rundmesser ist einstellbar. Die Relativstellung wird einerseits von einer Schnittluft, um welche die erste Messerschneide axial in Richtung der ersten Drehachse von der zweiten Messerschneide beabstandet ist, und andererseits von einer Eintauchtiefe, um welche die erste Messerschneide und die zweite Messerschneide einander radial in einer Richtung senkrecht zu den Drehachsen überlappen, definiert ist. Zur Einstellung der vorgenannten Relativstellung ist eine Zwangskopplung zwischen der Schnittluft einerseits und der Eintauchtiefe andererseits derart vorhanden, dass sich bei Einstellung einer bestimmten Schnittluft zwangsweise eine vorgegebene Eintauchtiefe einstellt und umgekehrt.

Die erfindungsgemäße Zwangskopplung ist derart ausgelegt, dass jeder durch eine bestimmte Blechdicke vorgegebenen Schnittluft die zu der bestimmten Blechdicke passende Eintauchtiefe zugeordnet ist und umgekehrt. Dadurch wird erreicht, dass lediglich der Parameter Schnittluft oder der Parameter Eintauchtiefe an der erfindungsgemäßen Vorrichtung eingestellt werden muss. Der jeweils andere Parameter Eintauchtiefe oder Schnittluft stellt sich zwangsläufig bzw. automatisch ein. Da dabei stets die bei einer konkreten Blechdicke zu beachtende Korrelation zwischen Schnittluft einerseits und Eintauchtiefe andererseits beachtet wird, werden mit der erfindungsgemäßen Vorrichtung stets qualitativ hochwertige Schneidergebnisse erreicht. Ein nicht exaktes Einstellen der erforderlichen Korrelation zwischen Schnittluft und Eintauchtiefe kann nicht mehr auftreten.

Das Einstellen der Korrelation zwischen Schnittluft und Eintauchtiefe kann bei der erfindungsgemäßen Vorrichtung beispielsweise mittels einer CNC (Computerized Numerical Control)-Steuerung erfolgen. An einer Eingabeeinheit kann beispielsweise lediglich die Blechdicke des zu schneidenden Blechs eingegeben werden, wenn in der CNC-Steuerung die Korrelationsinformation gespeichert ist, welche Größe die Parameter Schnittluft und Eintauchtiefe bei verschiedenen, auswählbaren Blechdicken haben sollen.

Eine mechanische Zwangskopplung im Sinne der vorliegenden Erfindung ist dadurch verwirklicht, dass das erste Rundmesser drehbar an einem linear bewegbaren Exzenterelement mit einer Exzenterachse gelagert ist. Dabei weist die erste Drehachse einen Exzenterversatz relativ zu der Exzenterachse auf. Das Exzenterelement ist mit einem zu der Exzenterachse konzentrischen Gewinde zum linearen Bewegen des Exzenterelements versehen, wobei sich das Gewinde an einem Gegengewinde eines Gehäuses der erfindungsgemäßen Vorrichtung abstützen kann. Durch Drehen des Exzenterelements relativ zu dem Gehäuse kann das Exzenterelement linear bewegt werden, um eine bestimmte Schnittluft ein zu stellen. Damit ist zwangsweise ein Drehen bzw. Schwenken der ersten Drehachse um die Exzenterachse herum verbunden, wodurch auch die Einstellung einer vorgegebenen Eintauchtiefe erfolgt.

Die geometrische Auslegung des Exzenterversatzes einerseits sowie der Steigung des Gewindes andererseits legt die von der erfindungsgemäßen Zwangskopplung umzusetzende Korrelation zwischen den Parametern Schnittluft und Eintauchtiefe fest. Die Einstellung einer bestimmten Schnittluft oder einer bestimmten Eintauchtiefe führt stets zu der für die vorgegebene Blechdicke optimalen Korrelation von Schnittluft und Eintauchtiefe.

Vorzugsweise handelt es sich bei dem Gewinde an dem Exzenterelement, das sich an dem Gehäuse der Vorrichtung abstützt, um ein Außengewinde. In besonders vorteilhafter Weise kann das Einstellen sowohl einer bestimmten Schnittluft als auch der zu dieser zugehörigen Eintauchtiefe mit Hilfe eines einzigen Servomotors erfolgen, der das Exzenterelement dreht. Hierzu kann der Servomotor dauerhaft oder nur vorübergehend zum Einstellen der Relativstellung der Rundmesser in Drehverbindung mit dem Exzenterelement stehen.

### c) Ausführungsbeispiel

Nachfolgend wird ein Ausführungsbeispiel der erfindungsgemäßen Vorrichtung beispielhaft anhand der beigefügten Zeichnungen beschrieben. Es zeigen:
- Fig. 1:: eine schematische, perspektivische Ansicht des ersten Rundmessers und des zweiten Rundmessers eines Ausführungsbeispiels der erfindungsgemäßen Vorrichtung in einer ersten Relativstellung;
- Fig. 2:: eine weiter schematisierte Teilansicht der in Fig. 1 gezeigten Rundmesser mit Blickrichtung senkrecht zu deren Drehachsen;
- Fig. 3:: eine schematische, perspektivische Ansicht ähnlich Fig. 1, wobei eine zweite Relativstellung der Rundmesser zueinander gezeigt ist;
- Fig. 4:: eine weiter schematisierte Teilansicht der in Fig. 3 gezeigten Rundmesser mit Blickrichtung senkrecht zu deren Drehachsen;
- Fig. 5:: eine schematische, perspektivische Ansicht ähnlich der Fig. 1 und 3, wobei eine dritte Relativstellung der Rundmesser zueinander gezeigt ist; und
- Fig. 6:: eine weiter schematisierte Teilansicht der in Fig. 5 gezeigten Rundmeser mit Blickrichtung senkrecht zu deren Drehachsen.

Eine erfindungsgemäße Vorrichtung kann insbesondere in Zusammenhang mit Blechbiegemaschinen Anwendung finden. Sie dient dort dem Abschneiden des danach von der Blechbiegemaschine zu biegenden Blechs und kann beispielsweise an einem motorisch antreibbaren Schlitten linear bewegbar gelagert sein. Mit Hilfe des Schlittens wird die Vorrichtung zum Schneiden des Blechs linear entlang der vorgesehenen Schnittlinie bewegt. Die beiden Rundmesser der Vorrichtung sind nicht aktiv drehangetrieben, sondern drehen sich ausschließlich aufgrund der Schnittreaktionskräfte, die während des durch die lineare Bewegung der Vorrichtung entlang der Schnittlinie bewirkten Schneidvorgangs wirken, passiv um ihre jeweilige Drehachse.

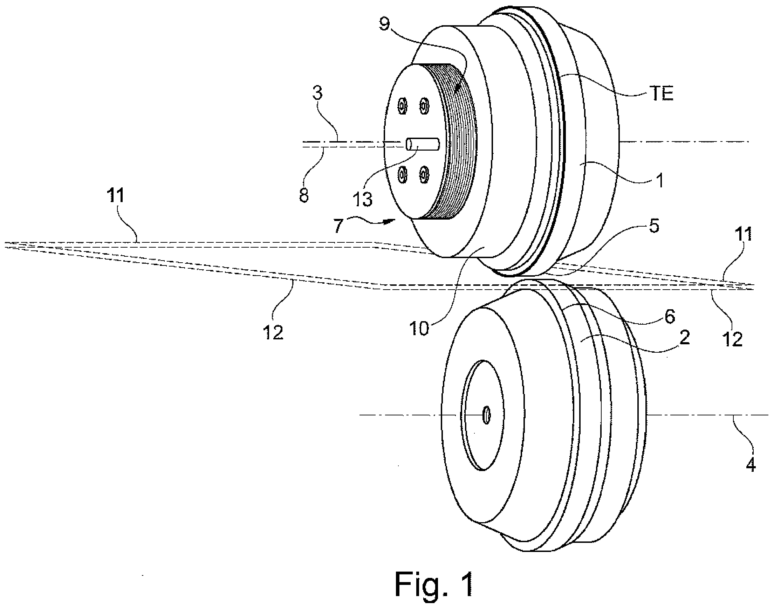

Die Vorrichtung zum Schneiden von Blech weist ein nicht gezeigtes Gehäuse auf, in welchem sich ein erstes Rundmesser 1 sowie ein zweites Rundmesser 2 befinden, die in Fig. 1 dargestellt sind. Das in Fig. 1 untere, zweite Rundmesser 2 ist in dem Gehäuse der Vorrichtung um eine zweite Drehachse 4 passiv drehbar gelagert. Die Drehachse 4 ist in dem Gehäuse ortsfest, so dass sich das Rundmesser 2 zwar passiv drehen kann, jedoch keine weitere Bewegung relativ zu dem Gehäuse möglich ist.

Das in Fig. 1 obere, erste Rundmesser 1 ist drehbar an einem Exzenterelement 7 gelagert. Die Trennebene TE kennzeichnet die Trennung zwischen dem Rundmesser 1 und dem Exzenterelement 7.

Das Exzenterelement 7 weist eine umlaufende Gleitlagerfläche 10 auf, mit welcher es um eine Exzenterachse 8 drehbar sowie in Längsrichtung der Exzenterachse 8 axial verschiebbar in einem Lagersitz des in Fig. 1 nicht gezeigten Gehäuses gelagert ist. Konzentrisch zu der Gleitlagerfläche 10 weist das Exzenterelement 7 ein Gewinde 9 auf, bei dem es sich hier um ein Außengewinde handelt. In dem gehäuseseitigen Lagersitz kann sich das Exzenterelement 7 um die Exzenterachse 8 drehen sowie entlang dieser axial bewegen, wobei die Exzenterachse 8 wie die Drehachse 4 des zweiten Rundmessers 2 relativ zu dem Gehäuse der Vorrichtung ortsfest ist.

Das erste Rundmesser 1 ist um eine erste Drehachse 3 relativ zu dem Exzenterelement 7 sowie relativ zu dem Gehäuse der Vorrichtung drehbar. Wie in Fig. 1 zu erkennen ist, ist die Drehachse 3 relativ zu der Exzenterachse 8 versetzt und parallel zu dieser angeordnet. Das Gewinde 9 steht in Eingriff mit einem nicht gezeigten, gehäuseseitigen Innengewinde, an dem es sich abstützt. Durch Drehen des Exzenterelements 7 wird somit zum einen die Drehachse 3 des Rundmessers 1 auf einer Kreisbahn um die Exzenterachse 8 geschwenkt sowie zum anderen die aus Exzenterelement 7 und Rundmesser 1 bestehende Baueinheit in Richtung der Exzenterachse 8 linear verschoben. Das Rundmesser 1 kann in Richtung der Exzenterachse 8 sowie in der Richtung senkrecht zu der Exzenterachse 8 auf das zweite Rundmesser 2 zu- oder von dem zweiten Rundmesser 2 wegbewegt werden.

Das erste Rundmesser 1 weist eine kreisringförmige, erste Messerschneide 5 auf, während das zweite Rundmesser 2 mit einer kreisringförmigen, zweiten Messerschneide 6 versehen ist. Der in Fig. 1 unterste Punkt der Messerschneide 5 befindet sich in einer ersten Tangentialebene 11. Der in Fig. 1 oberste Punkt der Messerschneide 6 befindet sich in einer zweiten Tangentialebene 12.

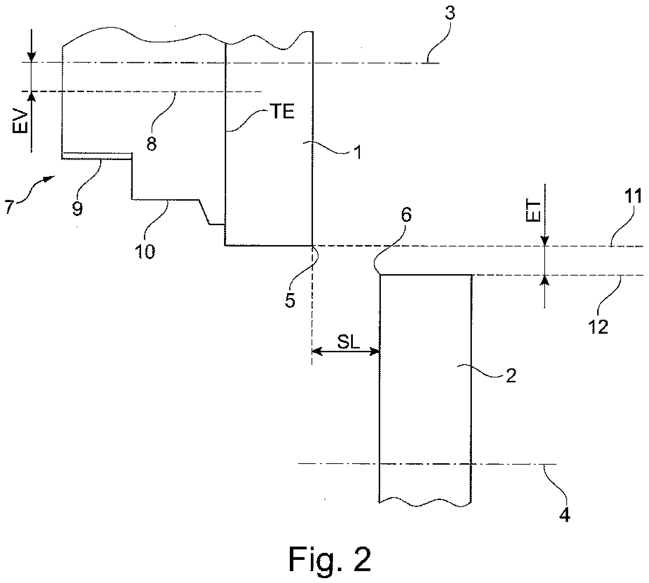

Fig. 2 zeigt eine vergrößerte Teilansicht der in Fig. 1 dargestellten Rundmesser 1 und 2 in einer Blickrichtung parallel zu den von den kreisringförmigen Messerschneiden 5 und 6 aufgespannten Ebenen (in der Perspektive der Fig. 1 von rechts vorne). Gleiche Bezugszeichen kennzeichnen gleiche Teile wie in Fig. 1. Die in Fig. 1 links und rechts von dem Rundmesser 2 zu erkennenden Elemente wurden in der Darstellung der Fig. 2 der Einfachheit halber weggelassen.

In den Fig. 1 und 2 befindet sich die Drehachse 3 relativ zu der Exzenterachse 8 in ihrem oberen Totpunkt, so dass in Fig. 2 das tatsächliche Maß des Exzenterversatzes EV zwischen der gestrichelten Exzenterachse 8 und der strichpunktierten Drehachse 3 zu sehen ist. Dementsprechend befindet sich die erste Tangentialebene 11 in ihrer obersten Lage oberhalb der Tangentialebene 12. Der Abstand zwischen den Tangentialebenen 11 und 12 bildet die sogenannte Eintauchtiefe ET, die bei der Relativstellung im Sinne der Fig. 2 so groß ist wie der Exzenterversatz EV. Sie ist außerdem mathematisch negativ, da die Messerschneiden 5 und 6 in vertikaler Richtung der Fig. 2 einander nicht überlappen (erste Messerschneide 5 taucht nicht in die zweite Tangentialebene 12 ein).

In Fig. 2 ist des Weiteren die sogenannte Schnittluft SL eingezeichnet, die den Abstand zwischen der von der Messerschneide 5 aufgespannten Ebene und der von der Messerschneide 6 aufgespannten Ebene in Blickrichtung der Drehachsen 3 und 4 bezeichnet.

Die Eintauchtiefe ET sowie die Schnittluft SL bilden Parameter, die in Abhängigkeit von der Dicke des zu schneidenden Blechs sowie gegebenenfalls in Abhängigkeit von der werkstoffmäßigen Zusammensetzung des zu schneidenden Blechs in einer optimalen Korrelation zueinander einzustellen sind. Während des Schneidvorgangs befindet sich das nicht gezeigte, zu schneidende Blech zwischen den Messerschneiden 5 sowie 6 und die Rundmesser 1 sowie 2 rollen passiv um ihre Drehachsen 3 und 4 ab.

Die in den Fig. 1 und 2 gezeigte Relativstellung der Rundmesser 1 und 2 mit maximaler Schnittluft SL sowie maximaler, negativer Eintauchtiefe ET bildet lediglich einen Ausgangspunkt für die Einstellung von Relativstellungen der Rundmesser 1 und 2, die tatsächlich als Arbeitspositionen beim Schneiden des Blechs zum Einsatz kommen. Zur Kennzeichnung der Drehstellung des Exzenterelements 7 ist an diesem entsprechend Fig. 1 ein Positionsstift 13 angebracht.

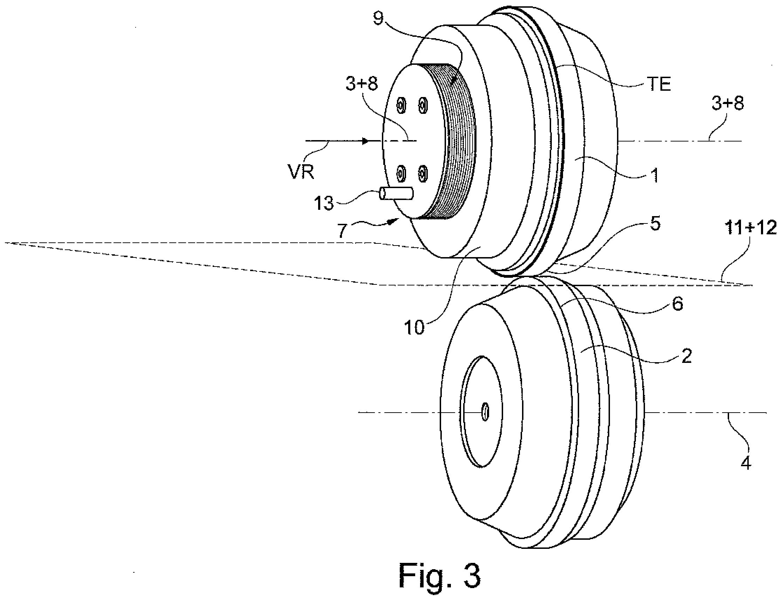

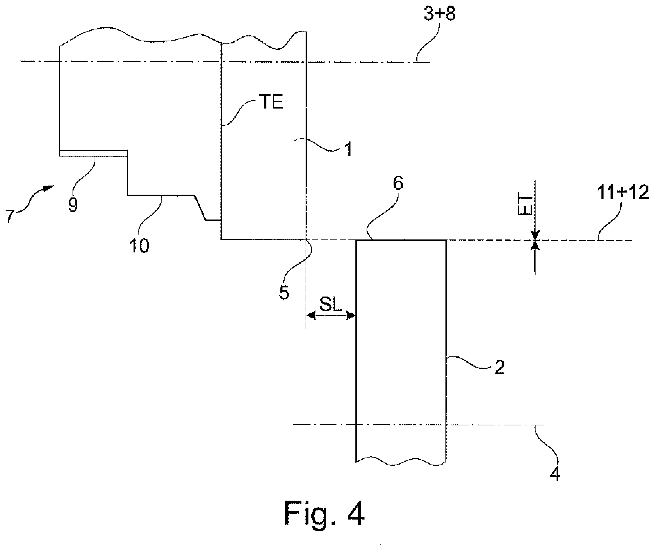

Durch Drehen des Exzenterelements 7 um 90° in der Blickrichtung der Fig. 1 von links nach rechts im Uhrzeigersinn wird die in den Fig. 3 und 4 gezeigte Relativstellung der Rundmesser 1 und 2 erreicht, wie an dem Positionsstift 13 in Fig. 3 zu erkennen ist. Gleiche Bezugszeichen in den Fig. 3 und 4 wie in den Fig. 1 und 2 kennzeichnen gleiche Teile.

Da sich das Gewinde 9 während der vorgenannten Drehung des Exzenterelements 7 an einem Gegengewinde des nicht gezeigten Gehäuses der Vorrichtung abstützt, bewegt sich das Exzenterelement 7 samt dem ersten Rundmesser 1 in den Fig. 1 und 2 nach rechts, was in Fig. 3 durch die Verschieberichtung VR gekennzeichnet ist. Dementsprechend ist die Schnittluft SL in Fig. 4 kleiner als die in Fig. 2 gezeigte Schnittluft SL, und zwar um ein Viertel der Steigung des Gewindes 9 (resultierend aus der Drehung des Exzenterelements 7 um 90°).

Dieser Axialbewegung des Rundmessers 1 bzw. der Messerschneide 5 entlang der Exzenterachse 8 nach rechts ist eine Bewegung des Rundmessers 1 bzw. der Messerschneide 5 in Fig. 2 nach unten sowie aus der Zeichenebene der Fig. 2 heraus überlagert. Diese überlagerte Bewegung ergibt sich aus der Drehbewegung der Drehachse 3 um 90° auf einer Viertelkreisbahn um die Exzenterachse 8, wobei der Radius der Viertelkreisbahn so groß ist wie der Exzenterversatz EV. Wie in Fig. 4 zu erkennen ist, liegen die Exzenterachse 8 und die Drehachse 3 in Blickrichtung der Fig. 4 genau hintereinander, so dass sie in Fig. 4 sowohl als Strichlinie (Exzenterachse 8) als auch als strichpunktierte Linie (Drehachse 3) dargestellt sind.

Das Rundmesser 1 bzw. die Messerschneide 5 hat sich ausgehend von der in Fig. 2 gezeigten Position um eine Strecke nach unten bewegt, die dem Exzenterversatz EV entspricht. Die erste Tangentialebene 11 bzw. der unterste Punkt der Messerschneide 5 ist dadurch in die zweite Tangentialebene 12 gewandert, so dass der unterste Punkt der Messerschneide 5 und der oberste Punkt der Messerschneide 6 in den in Fig. 3 und 4 zusammenfallenden Tangentialebenen 11 und 12 liegen. Die Eintauchtiefe ET in Fig. 4 beträgt Null.

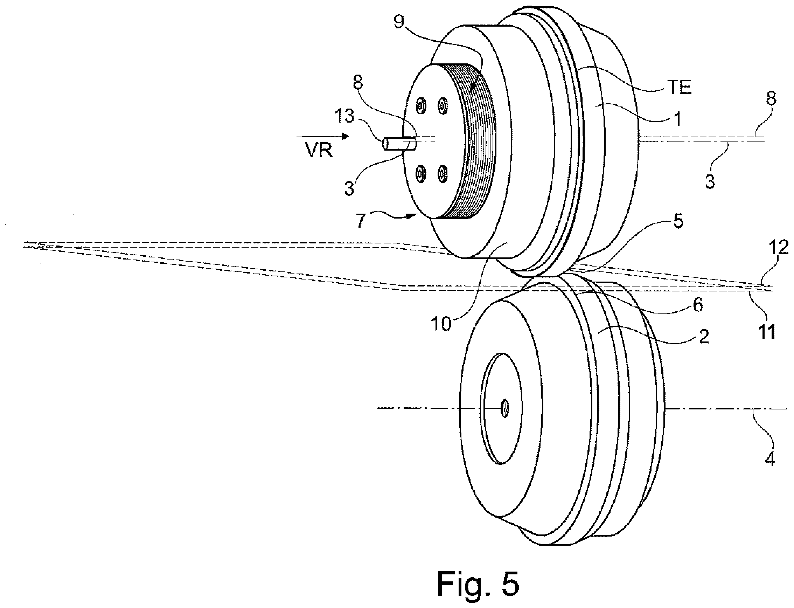

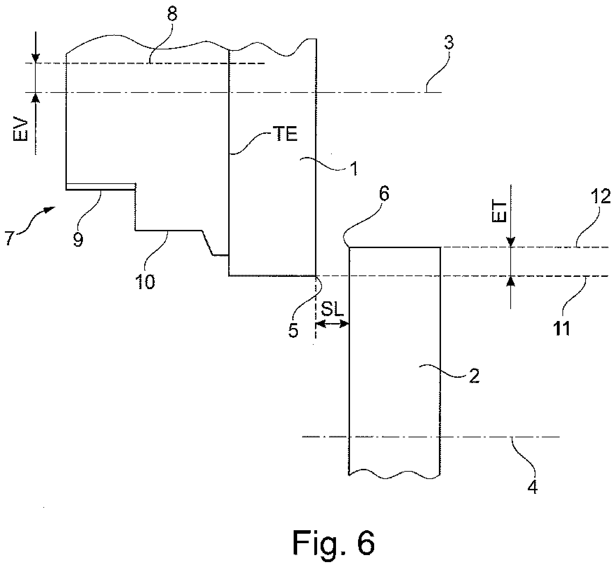

In den Fig. 5 und 6 ist eine weitere Relativstellung der Rundmesser 1 und 2 zueinander gezeigt, die ausgehend von der in den Fig. 3 und 4 dargestellten Relativstellung durch Drehen des Exzenterelements 7 um weitere 90° um seine Exzenterachse 8 erreicht wird, wie an dem in Fig. 5 eingezeichneten Positionsstift 13 zu erkennen ist. Gleiche Bezugszeichen in den Fig. 5 und 6 kennzeichnen gleiche Teile wie in den Fig. 1 bis 4.

Während der weiteren Drehbewegung des Exzenterelements 7 um 90° hat es sich entsprechend der Verschieberichtung VR in Fig. 5 wiederum um ein Viertel der Steigung des Gewindes 9 nach rechts bewegt und dabei das Rundmesser 1 um eine entsprechende Wegstrecke mitgenommen. Folglich hat sich die Schnittluft SL ein weiteres Mal um ein Viertel der Steigung des Gewindes 9 verringert, wie qualitativ in Fig. 6 zu erkennen ist.

Gleichzeitig hat sich die Drehachse 3 des Rundmessers 1 um weitere 90° auf der Kreisbahn um die Exzenterachse 8 gedreht, so dass sich das Rundmesser 1 bzw. die Messerschneide 5 in Fig. 6 um den Exzenterversatz EV nach unten bewegt hat. Die erste Messerschneide 5 ist um eine Wegstrecke in die zweite Tangentialebene 12 des zweiten Rundmessers 2 eingetaucht, die so groß ist wie der Exzenterversatz EV. Entsprechend weit befindet sich in Fig. 6 jetzt die erste Tangentialebene 11 unterhalb der zweiten Tangentialebene 12.

Die Messerschneiden 5 und 6 überlappen einander derart, dass in Fig. 6 der unterste Punkt der Messerschneide 5 um die maximale Eintauchtiefe ET unterhalb des obersten Punktes der Messerschneide 6 liegt. Da es sich um ein tatsächliches Eintauchen der Messerschneide 5 in die Tangentialebene 12 handelt, ist die Eintauchtiefe ET in den Fig. 5 und 6 mathematisch positiv. Wie in den Fig. 1 und 2 entspricht die Eintauchtiefe ET auch in den Fig. 5 und 6 dem maximal erreichbaren Betrag des Exzenterversatzes EV.

Wird das Exzenterelement 7 ausgehend von seiner in den Fig. 5 und 6 gezeigten Stellung in Blickrichtung der Fig. 5 von links nach rechts im Uhrzeigersinn weiter gedreht, verkleinert sich die Eintauchtiefe ET zunächst wieder während gleichzeitig die Schnittluft SL weiter verringert wird. Nach einer Drehung des Exzenterelements um 270° wird unter fortschreitender Verringerung der Schnittluft SL schließlich wieder die in den Fig. 3 und 4 gezeigte Eintauchtiefe ET von Null erreicht. Bei Weiterdrehen des Exzenterelements 7 bis zu einer Vollumdrehung von 360° stellt sich nach wie vor unter fortschreitender Verringerung der Schnittluft SL wieder die in den Fig. 1 und 2 gezeigte maximale, negative Eintauchtiefe ET in betragsmäßiger Höhe des Exzenterversatzes ein.

Selbstverständlich sind beliebige Zwischenrelativstellungen der Rundmesser 1 und 2 einstellbar, die nicht den in den Fig. 1 bis 6 beispielhaft gezeigten Relativstellungen entsprechen. Die Zwischenrelativstellungen ergeben sich aus Drehungen des Exzenterelements 7 um Winkel zwischen 0° und 90°, zwischen 90° und 180°, zwischen 180° und 270° sowie zwischen 270° und 360°.

Die Drehung des Exzenterelements 7 um die Exzenterachse 8 erfolgt mit Hilfe eines einzigen Servomotors, der mit einem nicht gezeigten Antriebselement zumindest vorübergehend in die in den Fig. 1, 3 und 5 zu sehende Stirnfläche des Exzenterelements 7 eingreifen kann, aus welcher der Positionsstift 13 herausragt.

Die Größe des Exzenterversatzes EV, die Größe der Steigung des Gewindes 9 sowie die geometrische Ausgangsrelativstellung der Rundmesser 1 und 2, die in den Fig. 1 und 2 gezeigt ist, definieren die erfindungsgemäße Zwangskopplung zwischen der Schnittluft SL und der Eintauchtiefe ET. In der elektronischen Maschinensteuerung der Anlage, beispielsweise einer Blechbiegemaschine, in welcher die erfindungsgemäße Vorrichtung zum Schneiden von Blech zur Anwendung kommt, kann jeder Dicke des zu schneidenden Blechs eine ganz bestimmte Drehstellung des Exzenterelements 7 zugeordnet werden. Die Abstimmung der Parameter Schnittluft SL und Eintauchtiefe ET auf die Dicke des zu schneidenden Blechs ist somit im Hinblick auf die richtige Korrelation von Schnittluft SL und Eintauchtiefe ET deutlich sicherer sowie im Übrigen stark vereinfacht durchführbar.

### BEZUGSZEICHENLISTE

- 1: Erstes Rundmesser
- 2: Zweites Rundmesser
- 3: Erste Drehachse
- 4: Zweite Drehachse
- 5: Erste Messerschneide
- 6: Zweite Messerschneide
- 7: Exzenterelement
- 8: Exzenterachse
- 9: Gewinde des Exzenterelements 7
- 10: Gleitlagerfläche
- 11: Erste Tangentialebene
- 12: Zweite Tangentialebene
- 13: Positionsstift

- ET: Eintauchtiefe
- EV: Exzenterversatz
- SL: Schnittluft
- TE: Trennebene zwischen Exzenterelement 7 und Rundmesser 1
- VR: Verschieberichtung des Exzenterelements 7

## Patentansprüche

1. Vorrichtung zum Schneiden von Blech umfassend ein erstes Rundmesser (1) mit einer ersten Messerschneide (5) und ein zweites Rundmesser (2) mit einer zweiten Messerschneide (6), wobei sich das zu schneidende Blech beim Schneiden zwischen dem ersten (1) und dem zweiten Rundmesser (2) befindet, wobei das erste Rundmesser (1) um eine erste Drehachse (3) und das zweite Rundmesser (2) um eine zweite Drehachse (4) drehbar gelagert ist, die parallel zu der ersten Drehachse (3) verläuft, und wobei eine Relativstellung des ersten Rundmessers (1) relativ zu dem zweiten Rundmesser (2) einstellbar ist, die von einer Schnittluft (SL), um welche die erste Messerschneide (5) axial in Richtung der ersten Drehachse (3) von der zweiten Messerschneide (6) beabstandet ist, und von einer Eintauchtiefe (ET), um welche die erste Messerschneide (5) und die zweite Messerschneide (6) einander radial in einer Richtung senkrecht zu den Drehachsen (3, 4) überlappen, definiert ist, wobei eine Zwangskopplung zwischen der Schnittluft (SL) und der Eintauchtiefe (ET) zur Einstellung der Relativstellung derart vorhanden ist, dass sich bei Einstellung einer bestimmten Schnittluft (SL) zwangsweise eine vorgegebene Eintauchtiefe (ET) einstellt und umgekehrt,
**dadurch gekennzeichnet, dass**
das erste Rundmesser (1) drehbar an einem linear bewegbaren Exzenterelement (7) mit einer Exzenterachse (8) gelagert ist, die erste Drehachse (3) einen Exzenterversatz (EV) relativ zu der Exzenterachse (8) aufweist und das Exzenterelement (7) mit einem zu der Exzenterachse (8) konzentrischen Gewinde (9) zum linearen Bewegen des Exzenterelements (7) versehen ist, so dass eine lineare Bewegung des Exzenterelements (7) zum Einstellen der bestimmten Schnittluft (SL) durch Drehen des Exzenterelements (7) zwangsweise mit einer Drehung der ersten Drehachse (3) um die Exzenterachse (8) und damit der Einstellung der vorgegebenen Eintauchtiefe (ET) verbunden ist.

2. Vorrichtung nach Anspruch 1,
**dadurch gekennzeichnet, dass**
das Gewinde (9) ein Außengewinde ist.

3. Vorrichtung nach Anspruch 1 oder 2,
**dadurch gekennzeichnet, dass**
sie einen einzigen Servomotor zum Drehen des Exzenterelements (7) und damit zum Einstellen sowohl der bestimmten Schnittluft (SL) als auch der vorgegebenen Eintauchtiefe (ET) aufweist.

## Claims

1. Device for cutting sheet metal comprising a first circular blade (1) having a first blade edge (5) and a second circular blade (2) having a second blade edge (6), the sheet metal to be cut being located between the first (1) and the second circular blade (2) during cutting, the first circular blade (1) being rotatably mounted about a first axis of rotation (3) and the second circular blade (2) being rotatably mounted about a second axis of rotation (4) which runs parallel to the first axis of rotation (3), and it being possible to adjust a relative position of the first circular blade (1) relative to the second circular blade (2), which is defined by a cutting clearance (SL) by which the first blade edge (5) is axially spaced apart from the second blade edge (6) in the direction of the first axis of rotation (3), and by an immersion depth (ET) by which the first blade edge (5) and the second blade edge (6) radially overlap each other in a direction perpendicular to the axes of rotation (3, 4), wherein there is a positive coupling between the cutting clearance (SL) and the immersion depth (ET) for adjusting the relative position such that, when a specific cutting clearance (SL) is set, a predetermined immersion depth (ET) is inevitably set and vice versa,
**characterised in that**
the first circular blade (1) is rotatably mounted on a linearly movable eccentric element (7) having an eccentric axis (8), the first axis of rotation (3) has an eccentric offset (EV) relative to the eccentric axis (8) and the eccentric element (7) is provided with a thread (9) which is concentric with the eccentric axis (8) for linear movement of the eccentric element (7), so that a linear movement of the eccentric element (7) for setting the specific cutting clearance (SL) by rotating the eccentric element (7) is inevitably associated with a rotation of the first axis of rotation (3) about the eccentric axis (8) and thus with the setting of the predetermined immersion depth (ET).

2. Device according to claim 1,
**characterised in that**
the thread (9) is an external thread.

3. Device according to claim 1 or 2,
**characterised in that**
it has a single servo motor for rotating the eccentric element (7) and thus for setting both the specific cutting clearance (SL) and the predetermined immersion depth (ET).

## Revendications

1. Dispositif pour couper de la tôle, comprenant un premier couteau circulaire (1) avec une première lame de couteau (5) et un deuxième couteau circulaire (2) avec une deuxième lame de couteau (6), dans lequel la tôle à couper est située entre le premier (1) et le deuxième couteau circulaire (2) pendant la coupe, dans lequel le premier couteau circulaire (1) est monté de manière à pouvoir tourner autour d'un premier axe de rotation (3) et le deuxième couteau circulaire (2) est monté de manière à pouvoir tourner autour d'un deuxième axe de rotation (4) qui s'étend parallèlement au premier axe de rotation (3), et dans lequel une position relative du premier couteau circulaire (1) par rapport au deuxième couteau circulaire (2) est réglable, laquelle est définie par un air de coupe (SL), par lequel la première lame de couteau (5) est espacée axialement de la deuxième lame de couteau (6) dans la direction du premier axe de rotation (3), et par une profondeur d'immersion (ET), par laquelle la première lame de couteau (5) et la deuxième lame de couteau (6) se recouvrent radialement dans une direction perpendiculaire aux axes de rotation (3, 4), dans lequel
un couplage forcé est présent entre l'air de coupe (SL) et la profondeur d'immersion (ET) pour régler la position relative de telle manière qu'une profondeur d'immersion prédéterminée (ET) est réglée de manière forcée lorsqu'un air de coupe spécifique (SL) est réglé et vice versa,
**caractérisé en ce que**
le premier couteau circulaire (1) est montée à rotation sur un élément excentrique (7) mobile linéairement avec un axe excentrique (8), le premier axe de rotation (3) présente un décalage excentrique (EV) par rapport à l'axe excentrique (8), et l'élément excentrique (7) est pourvu d'un filetage (9) concentrique à l'axe excentrique (8) pour le mouvement linéaire de l'élément excentrique (7), de sorte qu'un mouvement linéaire de l'élément excentrique (7) pour le réglage de l'air de coupe déterminé (SL) par rotation de l'élément excentrique (7) est lié obligatoirement à une rotation du premier axe de rotation (3) autour de l'axe excentrique (8) et donc au réglage de la profondeur d'immersion prédéterminée (ET).

2. Dispositif selon la revendication 1,
**caractérisé en ce que**
le filetage (9) est un filetage extérieur.

3. Dispositif selon la revendication 1 ou 2,
**caractérisé en ce que**
il comprend un seul servomoteur pour faire tourner l'élément excentrique (7) et ainsi régler à la fois l'air de coupe déterminé (SL) et la profondeur d'immersion prédéterminée (ET).
